# EUROPÄISCHE PATENTANMELDUNG

(11) **EP 4 847 943 A1**
(43) Veröffentlichungstag der Anmeldung: **02.12.2026**
(21) Anmeldenummer: 26177847.6
(22) Anmeldetag: 11.05.2026
(51) Int. Cl.: G01S 5/16, G01S 11/12

(54) **KLASSIFIZIERUNG EINES FLUGOBJEKTS**

(30) Priorität: 28.05.2025 DE 102025001827
(71) Anmelder: Diehl Defence GmbH & Co. KG, 88662 Überlingen (DE)
(72) Erfinder: Rungenhagen, Matthias, 88682 Salem (DE); Löbau, Jörg, 88633 Heiligenberg (DE); Imkenberg, Frank, 88696 Owingen (DE)
(74) Vertreter: Diehl Patentabteilung

(57) **Zusammenfassung**

Die Erfindung betrifft ein Verfahren (100) zur Klassifizierung eines Flugobjekts (10), bei welchem eine mit dem Flugobjekt verknüpfte ultraviolette Emission (102) erfasst wird und auf Grundlage der genannten ultravioletten Emission eine Information betreffend eine Geschwindigkeit des Flugobjekts ermittelt wird.

## Beschreibung

Die Erfindung betrifft ein Verfahren zur Klassifizierung eines Flugobjekts, ein System zur Durchführung des Verfahrens sowie eine Verwendung des Systems.

Ein schnell fliegendes Flugobjekt, welches sich beispielsweise mit Überschallgeschwindigkeit oder mit Hyperschallgeschwindigkeit fortbewegt, kann nur schwer detektiert und korrekt klassifiziert werden. In der militärischen Anwendung können daher Überschallflugobjekte oder Hyperschallflugobjekte eine erhebliche Bedrohung darstellen. Aufgrund der hohen Fluggeschwindigkeit ist es erforderlich, derartige Flugobjekte frühzeitig erfassen zu können. Nur so kann ein Abwehrvorgang rechtzeitig und mit hinreichender Erfolgswahrscheinlichkeit eingeleitet werden. Ist ein Flugobjekt erfasst, gilt es daher, zunächst eine Information zu einer Fluggeschwindigkeit zu erhalten. Sodann kann das erfasste Flugobjekt klassifiziert werden und geeignete Gegenmaßnahmen können ergriffen werden. Eine Abschätzung oder Bestimmung einer Fluggeschwindigkeit bei einer großen Entfernung zum Flugobjekt, ist jedoch nur sehr schwer oder gar nicht möglich. Zwar ist es bereits bekannt, eine Geschwindigkeit eines Flugobjekts mithilfe eines Radars zu ermitteln. Hierzu wird in der Regel der Doppler-Effekt genutzt. Allerdings weisen bodengebundene Radargeräte eine nur eingeschränkte Sichtweite auf. Diese kann zudem durch die Erdkrümmung weiter reduziert sein. Da sich Überschall- oder Hyperschallflugobjekte in der Regel innerhalb der Erdatmosphäre fortbewegen, verbleibt aufgrund der hohen Fluggeschwindigkeiten nur wenig Zeit, um geeignete Gegenmaßnahmen zu ergreifen. Infolgedessen sinkt eine Wahrscheinlichkeit einer erfolgreichen Abwehr oder Bekämpfung eines Überschallflugobjekts oder eines Hyperschallflugobjekts erheblich. Ferner ist es bereits bekannt, luft- oder raumgestützte Infrarotsensoren zu verwenden, um eine Klassifizierung von Flugobjekten vorzunehmen. Dadurch kann ein Sichtbereich erheblich vergrößert werden. Allerdings eignen sich mittels der Infrarotsensoren erfasste Daten nur bedingt zum Zwecke einer Bestimmung oder Abschätzung einer Fluggeschwindigkeit eines detektierten Flugobjekts. Ferner können infrarotbasierte Detektionsverfahren mit Infrarottäuschkörpern getäuscht werden. Dadurch kann es häufig zu Fehlalarmen kommen. Ferner können solche Täuschkörper dazu genutzt werden, um ein Überwachungssystem zu überfordern, wodurch eine Erkennung einer relevanten Bedrohung, wie beispielsweise eines Überschallflugobjekts oder eines Hyperschallflugobjekts, erheblich erschwert oder gar verhindert wird.

Der vorliegenden Erfindung liegt die Aufgabe zugrunde, ein verbessertes Verfahren zur Klassifizierung eines Flugobjekts bereitzustellen. Diese Aufgabe wird gelöst durch ein Verfahren mit den Merkmalen des Anspruchs 1.

Des Weiteren liegt der Erfindung die Aufgabe zugrunde, ein System zur Durchführung des Verfahrens bereitzustellen. Diese Aufgabe wird gelöst durch ein System mit den Merkmalen des Anspruchs 11.

Überdies besteht eine Aufgabe der Erfindung darin, eine Verwendung des Systems anzugeben. Diese Aufgabe wird gelöst durch eine Verwendung mit den Merkmalen des Anspruchs 15.

Vorteilhafte Weiterbildungen sind jeweils Gegenstand abhängiger Unteransprüche.

Bei dem erfindungsgemäßen Verfahren zur Klassifizierung eines Flugobjekts wird eine mit dem Flugobjekt verknüpfte ultraviolette Emission erfasst. Auf Grundlage der erfassten ultravioletten Emission wird sodann eine Information betreffend eine Geschwindigkeit des Flugobjekts ermittelt.

Im Zusammenhang mit der vorliegenden Erfindung soll unter der ultravioletten Emission eine elektromagnetische Emission mit einer Wellenlänge von 400 nm oder weniger verstanden werden. Vorzugsweise wird vorliegend eine ultraviolette Emission aus einem Wellenlängenbereich von 200 nm bis 300 nm erfasst.

Das erfindungsgemäße Verfahren ermöglicht es, ein Flugobjekt aufwandsgünstig nach Maßgabe einer Fluggeschwindigkeit zu klassifizieren. Dadurch kann eine zuverlässige Detektion und Identifikation von Flugobjekten durchgeführt werden. Eine ultraviolette Emission ist zudem kaum störanfällig. Daher bieten diese ultravioletten Emissionen eine zuverlässige Detektionsmöglichkeit. Ferner kann dadurch ein Verfahren zur Klassifizierung bereitgestellt werden, welches robust gegenüber Täuschungsversuchen ist. Insbesondere erlaubt dies, Wirkkörper und Infrarottäuschkörper voneinander zu unterscheiden. Insbesondere kann auf diese Weise eine optische Detektion von Hyperschallflugobjekten bereitgestellt werden. Diese können dadurch rasch als solche erkannt und identifiziert werden. Unter einem Hyperschallflugobjekt soll im Zusammenhang mit der vorliegenden Erfindung ein Flugobjekt verstanden werden, welche sich mit einer Fluggeschwindigkeit von zumindest Mach 5 fortbewegt.

Eine vorteilhafte Weiterbildung sieht vor, dass die Information betreffend die Geschwindigkeit des Flugobjekts anhand eines Vergleichs der mit dem Flugobjekt verknüpften erfassten ultravioletten Emission und einer Emissionscharakteristik eines vorbestimmten Plasmas ermittelt wird. Wird ein mit dem Flugobjekt verknüpftes Plasma erkannt, kann ohne genaue Kenntnis einer tatsächlichen Fluggeschwindigkeit bereits darauf geschlossen werden, dass es sich um ein sehr schnelles Flugobjekt, wie beispielsweise ein Hyperschallflugobjekt handelt. Dadurch kann ein entsprechendes Flugobjekt zuverlässig klassifiziert werden. Des Weiteren kann anhand einer Intensität und/oder spektralen Zusammensetzung der mit dem Flugköper verknüpften ultravioletten Emission eine Geschwindigkeit des Flugobjekts mit einer verbesserten Genauigkeit abgeschätzt oder gar bestimmt werden.

Eine weitere vorteilhafte Weiterbildung sieht vor, dass die Information betreffend die Geschwindigkeit des Flugobjekts anhand eines Vergleichs der erfassten und mit dem Flugobjekt verknüpften ultravioletten Emission mit Daten betreffend eine Emissionscharakteristik von einem Abgasstrom eines Flugobjekts ermittelt wird. Dadurch kann ermittelt werden, ob es sich um ein angetriebenes oder um ein nicht angetriebenes Flugobjekt handelt. Ferner kann dadurch unterschieden werden, ob es sich bei der ultravioletten Emission lediglich um die eines Abgasstroms des Flugobjekts oder um eine geschwindigkeitsbedingte Plasmabildung handelt. Vergleichsweise langsam fliegende angetriebene Flugobjekte können auf diese Weise zuverlässig von beispielsweise Hyperschallflugobjekten abgegrenzt und dementsprechend korrekt klassifiziert werden.

Vorzugsweise wird eine ultraviolette Emission eines von einer Bewegung des Flugobjekts durch eine atmosphärische Umgebung resultierenden Plasmas als die mit dem Flugobjekt verknüpft ultraviolette Emission erfasst. Eine Emissionscharakteristik eines in einer Atmosphäre gebildeten Plasmas kann auf eine zuverlässige Weise genutzt werden kann, um beispielsweise ein Hyperschallflugobjekt zu identifizieren. Überdies kann eine mit dem Flugobjekt verknüpfte Plasmaspur ausgewertet werden, um eine Trajektorie des Flugobjekts zu ermitteln. Zudem kann so die Trajektorie des Flugobjekts aufwandsgünstig nachvollzogen und gegebenenfalls extrapoliert werden.

Vorteilhafterweise wird eine ultraviolette Emission eines von einer Reibung einer Außenfläche des Flugobjekts mit einer atmosphärischen Umgebung verursachten Plasmas als die mit dem Flugobjekt verknüpfte ultraviolette Emission erfasst. Dadurch kann ein Erfassen der mit dem Flugobjekt verknüpften ultravioletten Emission auf eine von dem Plasma ausgehende Emission beschränkt werden. Eine anderweitig verursachte ultraviolette Emission, welche beispielsweise von einem Abgasstrom des Flugobjekts ausgeht, kann dahingehend ausgeblendet werden. Auf diese Weise kann nach Maßgabe einer Intensität und/oder spektralen Zusammensetzung der ultravioletten Emission mit einer weiter verbesserten Genauigkeit eine Geschwindigkeit des Flugobjekts abgeschätzt werden.

In einer weiteren vorteilhaften Weiterbildung wird eine mit dem Flugobjekt verknüpfte kurzwellige Infrarotemission erfasst. Unter der genannten kurzwelligen Infrarotemission ist im Zusammenhang mit der vorliegenden Erfindung eine elektromagnetische Emission mit einer Wellenlänge von 780 nm bis kleiner als 3000 nm zu verstehen. Vorliegend ist daher üblicherweise als Nahinfrarotstrahlung bezeichnete Infrarotstrahlung ebenfalls mit von der genannten kurzwelligen Infrarotemission umfasst. Vorzugsweise wird eine kurzwellige Infrarotemission in einem Wellenlängenbereich von 1000 nm bis 1700 nm und besonders bevorzugt von 1500 nm bis 1700 nm als die genannte kurzwellige Infrarotemission erfasst. Vorteilhafterweise wird der Wellenlängenbereich von 1000 nm bis 1700 nm erfasst, wenn ein Sensor oder eine Kamera zur Erfassung der kurzwelligen Infrarotemission in einer Höhe von zumindest 20 km über Meereshöhe angeordnet ist und es wird der Wellenlängenbereich von 1500 nm bis 1700 nm erfasst, wenn ein Sensor oder eine Kamera zur Erfassung der kurzwelligen Infrarotemission in einer Höhe von kleiner als 20 km über Meereshöhe angeordnet ist.

Auf Grundlage der erfassten kurzwelligen Infrarotemission wird sodann eine Information betreffend eine Orientierung des Flugobjekts ermittelt. Dadurch können weitere Informationen zum Zwecke einer korrekten Klassifizierung des Flugobjekts gewonnen werden. Beispielsweise können dadurch langsam fliegende Flugobjekte, welche nicht angetrieben sind und/oder mit keiner ultravioletten Emission verknüpft sind, detektiert und klassifiziert werden. Ferner kann anhand einer kurzwelligen Infrarotemission eine Flugphase des Flugobjekts bestimmt werden. So kann mithilfe der kurzwelligen Infrarotemission beispielsweise ein Horizontalflug oder ein Sinkflug des Flugobjekts erkannt werden. Dies ermöglicht es, auf eine zuverlässige Weise eine Ausrichtung des Flugobjekts im Raum zu ermitteln. Des Weiteren kann anhand der genannten Orientierung des Flugobjekts eine weitere Trajektorie desselben auf eine verbesserte Weise ermittelt werden.

Zudem ist in einer vorteilhaften Weiterbildung vorgesehen, dass eine mit dem Flugobjekt verknüpfte mittlere Infrarotemission erfasst wird, auf Grundlage derer eine Information betreffend die Orientierung des Flugobjekts ermittelt wird. Unter der genannten mittleren Infrarotemission soll im Zusammenhang mit der vorliegenden Erfindung eine elektromagnetische Emission mit einer Wellenlänge von 3000 nm bis 8000 nm verstanden werden. Vorzugsweise wird vorliegend die mit dem Flugobjekt verknüpfte mittlere Infrarotemission in einem Wellenbereich von 3000 nm bis 5000 nm erfasst. Dadurch können zusätzliche Informationen zum Zwecke einer korrekten Klassifizierung des Flugobjekts gewonnen werden. Eine Klassifizierung und Detektion des Flugobjekts kann dadurch weiter verbessert werden. So kann beispielsweise anhand einer Kombination von Informationen betreffend die mittlere Infrarotemission und die kurzwellige Infrarotemission eine Temperatur des Flugobjekts bestimmt werden. Dies erleichtert eine Identifizierung des Flugobjekts.

Eine vorteilhafte Ausführungsvariante sieht vor, dass auf Grundlage einer Kombination der erfassten kurzwelligen Infrarotemission und erfassten mittleren Infrarotemission die Information betreffend die Orientierung des Flugobjekts ermittelt wird. Anhand der genannten Kombination können weitere Erkenntnisse zu einer Flugphase, wie beispielsweise einem Steigflug, einem Sinkflug oder einem Horizontalflug des Flugobjekts gewonnen werden. Die Trajektorie des Flugobjekts kann dadurch mit erhöhter Präzision nachvollzogen und/oder prognostiziert werden. Ferner können dadurch Infrarottäuschkörper rasch und zuverlässig als solche identifiziert und dementsprechend klassifiziert werden.

Vorzugsweise wird auf Grundlage der genannten ultravioletten Emission eine Information betreffend die Trajektorie des Flugobjekts ermittelt. Alternativ oder zusätzlich wird auf der Grundlage der genannten ultravioletten Emission eine Lokalisierung des Flugobjekts durchgeführt. Besonders bevorzugt wird auf der Grundlage der erfassten kurzwelligen Infrarotemission und/oder der erfassten mittleren Infrarotemission die Information betreffend die Trajektorie des Flugobjekts ermittelt und/oder die Lokalisierung des Flugobjekts durchgeführt. Dadurch kann beispielsweise eine Information zu einer Flughöhe ermittelt werden. Ferner kann eine Geschwindigkeit oder ein mögliches Ziel des Flugobjekts auf weiter verbesserte Weise ermittelt werden.

Ferner können weitere Eigenschaften Flugobjekts, wie zum Beispiel seine Masse, abgeschätzt werden.

In einer vorteilhaften Weiterbildung wird die mit dem Flugobjekt verknüpfte ultraviolette Emission, sowie vorzugsweise die mit dem Flugobjekt verknüpfte kurzwellige Infrarotemission und/oder mittlere Infrarotemission, in einer Höhe von zumindest 10 km über Meereshöhe erfasst. Dadurch kann ein weites Sichtfeld erreicht werden. Schnell fliegende Flugobjekte können frühzeitig identifiziert und klassifiziert werden. Insbesondere können Hyperschallflugobjekte rasch und frühzeitig detektiert werden. Dadurch können geeignete Gegenmaßnahmen rechtzeitig eingeleitet werden. Dies erlaubt es, ein Flugobjekt mit deutlichem Zeitvorsprung vor einer Erfassung durch einen bodengestützten Sensor, wie beispielsweise einem Radar, zu erkennen.

Die Erfindung sieht des Weiteren ein System vor, welches dazu eingerichtet ist, dass erfindungsgemäße Verfahren durchzuführen.

Das erfindungsgemäße System weist ein Kamerasystem erster Art auf, mittels welchem eine mit dem Flugobjekt verknüpfte ultraviolette Emission erfassbar ist. Bei der genannten ultravioletten Emission handelt es sich insbesondere um eine solche der im vorhergehenden Zusammenhang beschriebenen Art. Das Kamerasystem erster Art kann dabei mit einem optischen Filter versehen sein. Dieser ist in einer bevorzugten Ausführungsform dazu eingerichtet, Wellenlängen von kleiner 200 nm und größer 300 nm herauszufiltern. Vorteilhafterweise ist der Filter für Wellenlängen zwischen 200 nm und 300 nm durchgängig. Für weitere Wellenlängen im UV-Spektrum ist der genannte Filter weitestgehend undurchlässig. Eine extraterrestrische ultraviolette Strahlung kann dadurch herausgefiltert werden. Ferner kann auf diese Weise ein verbessertes Signal-zu-Rausch-Verhältnis erreicht werden. Dies ermöglicht es, eine Detektionsgenauigkeit zu steigern. Überdies können Störeinflüsse kleingehalten werden.

Des Weiteren weist das System eine Datenverarbeitungsvorrichtung auf, welche dazu eingerichtet ist, auf Grundlage der erfassten ultravioletten Emission eine Information betreffend eine Geschwindigkeit des Flugobjekts zu ermitteln. Bei der Datenverarbeitungsvorrichtung kann es sich beispielsweise um einen Computer, einen Mikrocontroller, einen Prozessor oder um eine andere programmierbare Hardwarekomponente handeln. Die Datenverarbeitungsvorrichtung ist zweckmäßigerweise dazu eingerichtet, Daten einzulesen, zu empfangen, zu schreiben, zu übertragen, zu speichern und/oder zu verwalten. Ferner kann es sich bei der Datenverarbeitungsvorrichtung um eine virtualisierte Hardwareressource handeln.

Mithilfe des Systems kann ein Flugobjekt gemäß einer Fluggeschwindigkeit klassifiziert werden. Dadurch kann eine zuverlässige Detektion und Identifizierung von schnellfliegenden Flugobjekten durchgeführt werden. Überdies kann dadurch ein System bereitgestellt werden, welches robust gegen Störeinflüsse oder Tauschmanöver ist. Des Weiteren kann mittels des Systems zuverlässig erkannt werden, ob sich ein Flugobjekt mit Hyperschallgeschwindigkeit bewegt. Bevorzugterweise wird das genannte System in einer Höhe von mehr als 10 km über Meereshöhe verwendet. Das System kann als ein raumgestütztes System, wie beispielsweise als ein Teil eines Satelliten, oder als ein luftgestütztes System, wie beispielsweise als Teil eines Flugzeugs, ausgeführt sein. Dadurch können tieffliegende Objekte in großer Entfernung bereits frühzeitig detektiert und klassifiziert werden.

Eine vorteilhafte Weiterbildung des Systems sieht ein Kamerasystem zweiter Art vor, mittels welchem eine mit dem Flugobjekt verknüpfte kurzwellige Infrarotemission erfassbar ist. Bei der kurzwelligen Infrarotemission handelt es sich insbesondere um eine der im vorhergehenden Zusammenhang beschriebenen Art. Des Weiteren ist vorzugsweise ein Kamerasystem dritter Art vorgesehen, mittels welchem eine mittlere Infrarotemission erfassbar ist. Bei der mittleren Infrarotemission handelt es sich insbesondere um eine mittlere Infrarotemission der oben beschriebenen Art. Dadurch kann eine hohe Genauigkeit bei der Bestimmung oder Prognose einer Trajektorie oder Orientierung eines detektierten Flugobjekts ermittelt werden. Des Weiteren wird dadurch eine Identifizierung oder Klassifizierung eines Flugobjekts vereinfacht. Ferner kann dadurch eine Temperatur des Flugobjekts ermittelt werden. So kann dieses identifiziert werden. Ferner kann auf diese Weise eine Flugphase, wie ein Steigflug, ein Sinkflug oder ein Horizontalflug, aufgrund einer jeweils zugehörigen Abstrahlcharakteristik ermittelt werden.

Vorzugsweise ist die Datenverarbeitungsvorrichtung dazu eingerichtet, durch das Kamerasystem erster Art, das Kamerasystem zweiter Art sowie das Kamerasystem dritter Art erfasste Daten gemeinsam zu verarbeiten. Dadurch kann eine Datenfusion der erfassten Daten durchgeführt werden. Weiterhin wird vorzugsweise eine Signalverarbeitung sensornah durch jedes der genannten Kamerasysteme separat durchgeführt. Zum Zwecke der Datenfusion können situationsadäquat vorbestimmte Bildverarbeitungsalgorithmen genutzt werden. Des Weiteren kann ein verbessertes Signal-zu-Rausch-Verhältnis oder ein verbessertes Signal-Clutter-Verhältnis erreicht werden, indem die erfassten Daten betreffend die ultraviolette Emission, die kurzwellige Emission und die mittlere Emission, anhand von beispielsweise Summen-, Differenz- und/oder Quotientenverfahren mit jeweils veränderlichen Parametern ausgewertet werden.

Die Erfindung sieht des Weiteren eine Verwendung des erfindungsgemäßen Systems in einer Höhe von mindestens 10 km über Meereshöhe vor. Vorzugsweise wird das genannte System mittels einer luftgestützten Plattform, wie beispielsweise eines Flugzeugs, oder einer raumgestützten Plattform, wie beispielswiese einem Satelliten, in einer Höhe von zumindest 10 km über Meereshöhe angeordnet, um das erfindungsgemäßen Verfahren durchzuführen.

Dies erlaubt es, einen großen Blickwinkel sowie ein weites Sichtfeld für das oder die genannten Kamerasysteme des Systems bereitzustellen. Eine mit dem Flugobjekt verknüpfte ultraviolette Emission kann dadurch zuverlässig und frühzeitig erfasst werden. Störeinflüsse durch meteorologische Turbulenzen, Wolken oder Täuschkörper können dadurch erheblich reduziert oder gar vermieden werden. Des Weiteren ermöglicht dies eine rasche und frühzeitige Detektion sowie Identifizierung von Hyperschallflugobjekten. So können Gegenmaßnahmen frühzeitig und rasch ergriffen werden. Infolgedessen kann eine hohe Erfolgswahrscheinlichkeit bei einer Abwehr oder Bekämpfung von Hyperschallflugobjekten erreicht werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, welche im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden. Bei den im Folgenden beschriebenen Figuren handelt es sich um schematische und nicht maßstabsgetreue Darstellungen.

Es zeigen:
- FIG 1: ein Ausführungsbeispiel eines Systems sowie eine Illustration eines Beispiels eines Verfahrens zur Klassifizierung eines Flugobjekts;
- FIG 2: eine Illustration des Beispiels des Verfahrens zur Klassifizierung des Flugobjekts anhand eines schematischen Ablaufdiagramms.

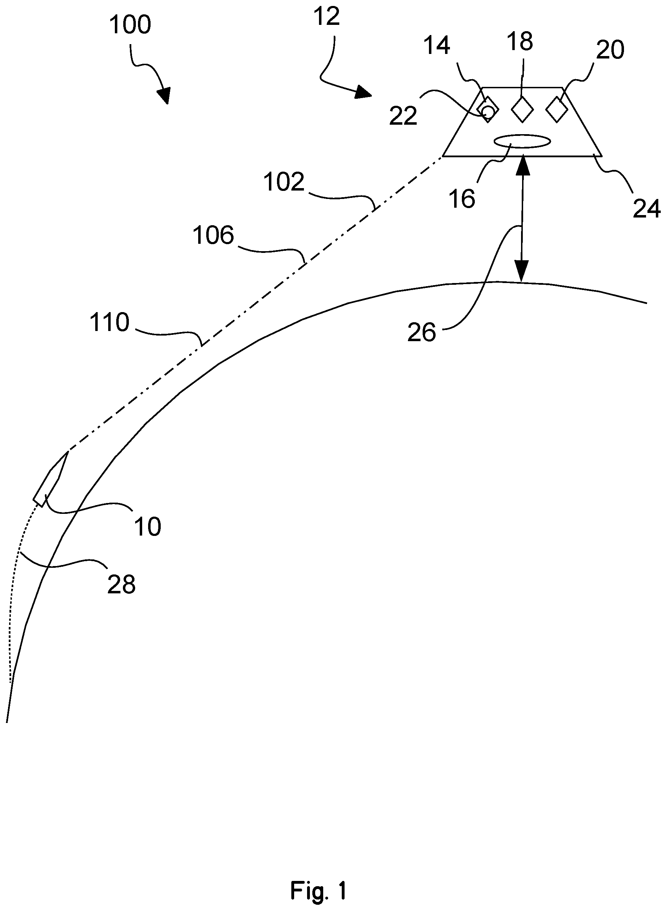

FIG 1 zeigt in einer schematischen Darstellung ein Ausführungsbeispiel eines Systems 12, welches dazu eingerichtet ist, ein Flugobjekt 10 zu klassifizieren. Des Weiteren illustriert FIG 1 ein Beispiel eines Verfahrens 100 zur Klassifizierung des Flugobjekts 10.

Das Ausführungsbeispiel des Systems 12 weist ein erstes Kamerasystem 14 auf, mittels welchem eine ultraviolette Emission erfassbar ist. Das erste Kamerasystem 14 weist im vorliegenden Ausführungsbeispiel einen Filter 22 auf, welcher für Wellenlängen von 200 nm bis 300 nm durchlässig ist. Für ultraviolette Emissionen mit größeren oder kleineren Wellenlängen ist der Filter 22 dahingegen weitestgehend undurchlässig. Zudem weist das System 12 ein zweites Kamerasystem 18 auf, mittels welchem eine kurzwellige Infrarotemission erfassbar ist. Vorliegend werden mittels des zweiten Kamerasystems 18 Infrarotemissionen in einem Wellenlängenbereich von 1500 nm bis 1700 nm erfasst 106. Überdies weist das System 12 ein drittes Kamerasystem 20 auf, mittels welchem eine mittlere Infrarotemission erfassbar ist. Vorliegend werden mittels des dritten Kamerasystems 20 elektromagnetische Emissionen mit einer Wellenlänge in einem Bereich von 3000 nm bis 5000 nm erfasst 110.

Ferner weist das Ausführungsbeispiel des Systems 12 eine Datenverarbeitungsvorrichtung 16 auf, welche dazu eingerichtet ist, die durch das erste Kamerasystem 14, das zweite Kamerasystem 18 sowie das dritte Kamerasystem 20 erfasste Daten gemeinsam zu verarbeiten. Vorliegend wird eine Signalverarbeitung erfasster Emissionen durch jedes der Kamerasysteme 14, 18, 20 separat durchgeführt. So kann jeweils eine sensornahe Signalverarbeitungselektronik verwendet werden. Ferner ist vorgesehen, dass eine Fusion von mittels der Kamerasysteme 14, 18, 20 erfasster Daten mittels der genannten Datenverarbeitungsvorrichtung 16 durchgeführt wird. Dadurch können situationsadäquate Bildverarbeitungsalgorithmen genutzt werden. Auf Grundlage der mittels der drei Kamerasysteme 14, 18, 20 erfassten Daten, also betreffend eine ultraviolette Emission, eine kurzwelllige Infrarotemission und eine mittlere Infrarotemission, kann ein Signal-zu-Rausch-Verhältnis oder ein Signal-Clutter-Verhältnis optimiert werden. Dies kann beispielsweise mithilfe von Summen-, Differenz- und/oder Quotientenverfahren erreicht werden. Ferner können zweckmäßigerweise jeweils veränderliche Parameter verwendet werden.

In dem vorliegenden Ausführungsbeispiel wird das System 12 auf einer luftgestützten Plattform 24 verwendet. Diese Plattform 24 kann beispielsweise als ein Flugzeug ausgeführt sein. Exemplarisch wird das System 12 auf diese Weise mittels der luftgestützten Plattform 24 in einer Höhe 26 von zumindest 10 km über Meereshöhe verwendet. Alternativ kann das System 12 auf eine nicht näher dargestellte Weise auf einer raumgestützten Plattform, wie beispielsweise auf einem Satelliten, verwendet werden.

FIG 1 illustriert des Weiteren, dass sich ein Flugobjekt 10 mit Hyperschallgeschwindigkeit entlang einer gestrichelt dargestellten Trajektorie 28 durch die Erdatmosphäre bewegt. Dabei weist das Flugobjekt 10 eine Fluggeschwindigkeit von mindestens Mach 5 auf. Infolgedessen kann aufgrund einer Reibung einer Außenfläche des Flugobjekts 10 mit Molekülen der Erdatmosphäre ein Plasma erzeugt werden. Dieses Plasma emittiert ultraviolette elektromagnetische Strahlung, welche eine charakteristische Intensitätsverteilung in Abhängigkeit einer emittierten Wellenlänge aufweist. Diese mit dem Flugobjekt 10 verknüpfte ultraviolette Emission des Plasmas wird vorliegend mittels des ersten Kamerasystems 14 erfasst 102.

Handelt es sich bei dem Flugobjekt 10 um ein angetriebenes Flugobjekt 10, so kann des Weiteren eine mit dem Flugobjekt 10 verknüpfte ultraviolette Emission durch einen Antrieb vorliegen. Dieser geht üblicherweise von einem zugehörigen Abgasstrom aus.

Um auf Grundlage der genannten erfassten 102 ultravioletten Emission eine Information betreffend eine Geschwindigkeit des Flugobjekts 10 zu ermitteln 104, wird im vorliegend beschriebenen Beispiel des Verfahrens 100 ein Vergleich der mit dem Flugobjekt 10 verknüpften, erfassten 102 ultravioletten Emission und einer vorbekannten Emissionscharakteristik eines in der Erdatmosphäre erzeugten Plasmas durchgeführt. Dadurch kann rasch erkannt werden, ob die erfasste 102 ultraviolette Emission ihren Ursprung in einem Plasma der Erdatmosphäre hat oder möglicherweise anderweitige Ursachen für die ultraviolette Emission vorliegen. Des Weiteren wird die Information betreffend die Geschwindigkeit des Flugobjekts 10 anhand eines weiteren Vergleichs der erfassten 102 und mit dem Flugobjekt 10 verknüpften ultravioletten Emission und vorbekannten Daten betreffend eine Emissionscharakteristik eines Abgasstroms eines solchen Flugobjekts 10 ermittelt 104. Einerseits kann dadurch rasch erkannt werden, ob es sich um ein angetriebenes oder um ein nicht angetriebenes Flugobjekt 10 handelt. Des Weiteren kann auf diese Weise zwischen einer ultravioletten Emission eines Abgasstroms des Flugobjekts 10 und einer geschwindigkeitsbedingten Plasmabildung unterschieden werden, welche beispielsweise bei einer Fluggeschwindigkeit von zumindest Mach 5 entstehen kann.

Die Information betreffend die Geschwindigkeit des Flugobjekts 10 wird vorliegend mittels der Datenverarbeitungsvorrichtung 16 ermittelt 104. Zudem ist die genannte Datenverarbeitungsvorrichtung 16 vorliegend dazu eingerichtet, eine Klassifizierung des Flugobjekts 10 durchzuführen.

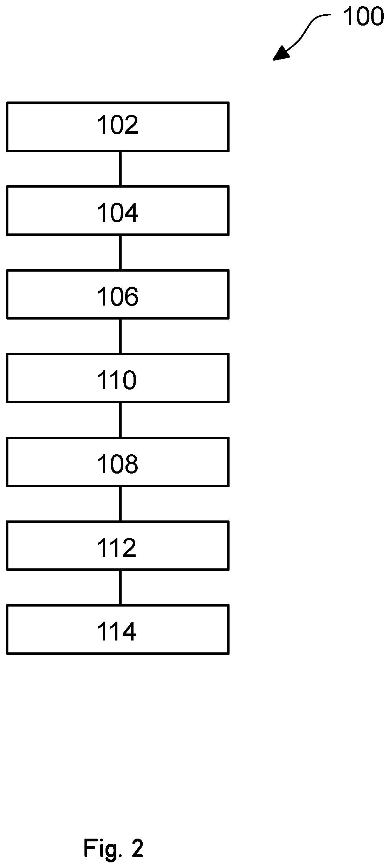

FIG 2 illustriert das im Zusammenhang mit FIG 1 bereits teilweise beschriebene Beispiel des Verfahrens 100 anhand eines schematischen Ablaufdiagramms.

Zusätzlich zu der Erfassung 102 der mit dem Flugobjekt 10 verknüpften ultravioletten Emission mittels des ersten Kamerasystems 14, wird mittels des zweiten Kamerasystems 18 eine mit dem Flugobjekt 10 verknüpfte kurzwellige Infrarotemission erfasst 106. Mit dem dritten Kamerasystem 20 wird des Weiteren eine mit dem Flugobjekt 10 verknüpfte mittlere Infrarotemission erfasst 110.

Auf Grundlage einer Kombination der erfassten 106 kurzwelligen Infrarotemission und der erfassten 110 mittleren Infrarotemission wird im vorliegend beschriebenen Beispiel des Verfahrens 100 eine Information betreffend eine Orientierung des Flugobjekts 10 ermittelt 108. Werden beispielsweise verhältnismäßig große Intensitäten einer kurzwelligen Infrarotemission sowie einer mittleren Infrarotemission erfasst 106, 110, wird üblicherweise eine Unterseite des Flugobjekts 10 mittels des zweiten Kamerasystems 18 und des dritten Kamerasystems 20 beobachtet. Wird dahingegen ein rasch größer werdendes Signal einer kurzwelligen Infrarotemission erfasst 106 und gleichzeitig dazu ein verhältnismäßig kleines Signal einer mittleren Infrarotemission erfasst 110, kann davon ausgegangen werden, dass das Flugobjekt 10 auf das System 12 zufliegt. Eine Oberseite des Flugobjekts 10 wird in der Regel dann beobachtet, wenn ein verhältnismäßig kleines Signal einer kurzwelligen Infrarotemission erfasst wird 106 und gleichfalls ein verhältnismäßig kleines Signal einer mittleren Infrarotemission erfasst wird 110. Die Information betreffend die Geschwindigkeit des Flugobjekts 10 wird weiterhin auf Grundlage der mit dem Flugobjekt 10 verknüpften ultravioletten Emission ermittelt 104. Anhand der Information betreffend die Orientierung des Flugobjekts 10 können ferner mittels des Systems 12 verschiedene Flugphasen des Flugobjekts 10 bestimmt werden. Bewegt sich das Flugobjekt 10 beispielsweise in einem Steigflug auf das System 12 zu, so ist dessen heiße Unterseite sichtbar. Diese Flugphase kann vorteilhaft mithilfe der erfassten 110 mittleren Infrarotemission erkannt werden. Im Horizontalflug weist der Flugobjekt 10 in der Regel eine heiße Nase sowie zumindest teilweise heiße Kanten auf. Eine Unterseite des Flugobjekts 10 ist in diesem Falle möglicherweise nur eingeschränkt sichtbar. Der Horizontalflug wird daher vorzugsweise anhand einer Kombination der erfassten 106 kurzwelligen Infrarotemission und der erfasst 110 mittleren Infrarotemission erkannt. Befindet sich das Flugobjekt 10 in einem Sinkflug, weist dieser häufig eine verhältnismäßig kühle Oberseite jedoch zumindest teilweise heiße Kanten oder Seitenflächen auf. Diese Flugphase wird bevorzugt auf Grundlage der erfassten 106 kurzwelligen Infrarotemission erkannt.

Überdies sieht das vorliegend beschriebene Beispiel des Verfahrens 100 vor, dass auf Grundlage der mit dem Flugobjekt 10 verknüpften erfassten 102 ultravioletten Emission, der erfassten 106 kurzwelligen Infrarotemission und der erfassten 110 mittleren Infrarotemission eine Information betreffend die Trajektorie 28 des Flugobjekts 10 ermittelt 112 wird. Hierzu wird insbesondere die Information betreffend die Orientierung und die Flugphase des Flugobjekts 10 herangezogen. Ergänzend dazu wird auf Grundlage der genannten erfassten 102, 106, 110 Emissionen eine Lokalisierung des Flugobjekts 10 durchgeführt 114. Anhand der so gewonnenen Informationen können zudem ein Flugziel und/oder eine Masse des Flugobjekts 10 ermittelt werden.

Dies erlaubt es, das zu klassifizierende Flugobjekt 10 von einem Hintergrund zuverlässig zu unterscheiden. Damit kann eine Erfassungsgenauigkeit weiter verbessert werden. So können beispielsweise Folgesensoren zum Zwecke eines Abfangens des Flugobjekts 10 zuverlässig eingewiesen werden. Eine Bekämpfung des Flugobjekts 10 daher mit einer erhöhten Erfolgswahrscheinlichkeit durchgeführt werden. Ferner besteht die Möglichkeit, dass Falschziele mit einer verbesserten Genauigkeit erkannt werden. So kann beispielsweise eine Objektklassifizierung und Objektdiskriminierung von Täuschkörpern, wie Infrarot- oder Radartäuschkörper, durchgeführt werden. Diese weisen in der Regel allenfalls eine antriebsbedingte ultraviolette Emission auf. Mithilfe des Erfassens 102 der ultravioletten Emission kann selbst bei unterschiedlichen Tageszeiten und unterschiedlichen Beleuchtungsbedingungen eine hohe Zuverlässigkeit bei der Klassifizierung des Flugobjekts 10 erreicht werden. Beispielsweise können dadurch weitere Informationen, wie eine Flughöhe, eine Masse und/oder ein Ziel des Flugobjekts 10 auf eine verbesserte Weise ermittelt werden.

Das Verfahren 100 ermöglicht es, Flugobjekte 10, wie beispielsweise Hyperschallraketen, mittels einer optischen Detektion in drei separaten Spektralbereichen, also der ultravioletten Emission, der kurzwelligen Infrarotemission und der mittleren Infrarotemission, zuverlässig und frühzeitig zu detektieren und als solche zu klassifizieren. Eine Trajektorie 28 des Flugobjekts 10 kann auf diese Weise frühzeitig erfasst und mit einer hohen Genauigkeit extrapoliert werden. Ferner kann mithilfe der erfassten 110 mittleren Infrarotemission und der erfassten 106 kurzwelligen Infrarotemission eine Temperatur des Flugobjekts 10 bestimmt werden. Dadurch kann das Flugobjekt 10 identifiziert werden.

### Bezugszeichenliste

- 100: Verfahren
- 102: ultraviolette Emission erfassen
- 104: Geschwindigkeit ermitteln
- 106: kurzwellige Infrarotemission erfassen
- 108: Orientierung ermitteln
- 110: mittlere Infrarotemission erfassen
- 112: Trajektorie ermitteln
- 114: Lokalisierung durchführen

- 10: Flugobjekt
- 12: System
- 14: Kamerasystem erster Art
- 16: Datenverarbeitungsvorrichtung
- 18: Kamerasystem zweiter Art
- 20: Kamerasystem dritter Art
- 22: Filter
- 24: luftgestützte Plattform
- 26: Höhe
- 28: Trajektorie

## Patentansprüche

1. Verfahren (100) zur Klassifizierung eines Flugobjekts (10),
bei welchem
- eine mit dem Flugobjekt (10) verknüpfte ultraviolette Emission erfasst wird (102);
- auf Grundlage der genannten ultravioletten Emission eine Information betreffend eine Geschwindigkeit des Flugobjekts (10) ermittelt wird (104).

2. Verfahren (100) nach Anspruch 1,
bei welchem die Information betreffend die Geschwindigkeit des Flugobjekts (10) anhand eines Vergleichs der mit dem Flugobjekt (10) verknüpften erfassten (102) ultravioletten Emission und einer Emissionscharakteristik eines vorbestimmten Plasmas ermittelt wird (104).

3. Verfahren (100) nach Anspruch 1 oder 2,
bei welchem die Information betreffend die Geschwindigkeit des Flugobjekts (10) anhand eines Vergleichs der mit dem Flugobjekt (10) verknüpften erfassten (102) ultravioletten Emission mit Daten betreffend eine Emissionscharakteristik von Abgasströmen eines Flugobjekts (10) ermittelt wird (104).

4. Verfahren (100) nach einem der vorhergehenden Ansprüche,
bei welchem eine ultraviolette Emission eines von einer Bewegung des Flugobjekts (10) durch eine atmosphärische Umgebung resultierenden Plasmas als die mit dem Flugobjekt (10) verknüpfte ultraviolette Emission erfasst wird (102).

5. Verfahren (100) nach einem der vorhergehenden Ansprüche,
bei welchem eine ultraviolette Emission eines von einer Reibung einer Außenfläche des Flugobjekts (10) mit einer atmosphärischen Umgebung verursachten Plasmas als die mit dem Flugobjekt (10) verknüpfte ultraviolette Emission erfasst wird (102).

6. Verfahren (100) nach einem der vorhergehenden Ansprüche,
bei welchem
- eine mit dem Flugobjekt (10) verknüpfte kurzwellige Infrarotemission erfasst wird (106);
- auf Grundlage der erfassten kurzwelligen Infrarotemission eine Information betreffend eine Orientierung des Flugobjekts (10) ermittelt wird (108).

7. Verfahren (100) nach einem der vorhergehenden Ansprüche,
bei welchem
- eine mit dem Flugobjekt (10) verknüpfte mittlere Infrarotemission erfasst wird (110);
- auf Grundlage der erfassten mittleren Infrarotemission eine Information betreffend eine Orientierung des Flugobjekts (10) ermittelt wird (108).

8. Verfahren (100) nach Anspruch 6 und 7,
bei welchem auf Grundlage einer Kombination der erfassten (106) kurzwelligen Infrarotemission und der erfassten (110) mittleren Infrarotemission die Information betreffend die Orientierung des Flugobjekts (10) ermittelt wird (108).

9. Verfahren (100) nach einem der vorhergehenden Ansprüche,
bei welchem auf Grundlage der genannten erfassten (102) ultravioletten Emission, sowie vorzugsweise der erfassten (106) kurzwelligen Infrarotemission und/oder der erfassten (110) mittleren Infrarotemission, eine Information betreffend eine Trajektorie (28) des Flugobjekts (10) ermittelt wird (112) und/oder eine Lokalisierung des Flugobjekts (10) durchgeführt wird (114).

10. Verfahren (100) nach einem der vorhergehenden Ansprüche,
bei welchem die mit dem Flugobjekt (10) verknüpfte ultraviolette Emission, sowie vorzugsweise die mit dem Flugobjekt (10) verknüpfte kurzwellige Infrarotemission und/oder mittlere Infrarotemission, in einer Höhe von zumindest 10 km über Meereshöhe erfasst wird (102).

11. System (12) zur Durchführung des Verfahrens (100) nach einem der vorhergehenden Ansprüche, aufweisend:
- ein Kamerasystem erster Art (14), mittels welchem eine mit einem Flugobjekt (10) verknüpfte ultraviolette Emission erfassbar ist;
- eine Datenverarbeitungsvorrichtung (16), welche dazu eingerichtet ist, auf Grundlage der erfassten ultravioletten Emission eine Information betreffend eine Geschwindigkeit des Flugobjekts (10) zu ermitteln.

12. System (12) nach Anspruch 11,
**gekennzeichnet durch,**
- ein Kamerasystem zweiter Art (18), mittels welchem eine mit dem Flugobjekt (10) verknüpfte kurzwellige Infrarotemission erfassbar ist;
- ein Kamerasystem dritter Art (20), mittels welchem eine mittlere Infrarotemission erfassbar ist.

13. System (12) nach Anspruch 12,
**dadurch gekennzeichnet,**
**dass** die Datenverarbeitungsvorrichtung (16) dazu eingerichtet ist, durch das Kamerasystem erster Art (14), das Kamerasystem zweiter Art (18) sowie das Kamerasystem dritter Art (20) erfasste Daten gemeinsam zu verarbeiten.

14. System (12) nach einem der Ansprüche 11 bis 13,
**dadurch gekennzeichnet,**
**dass** das Kamerasystem erster Art (14) mit einem optischen Filter (22) versehen ist, welcher dazu eingerichtet ist, Wellenlängen von kleiner 200 nm und größer 300 nm herauszufiltern.

15. Verwendung des Systems (12) nach einem der Ansprüche 11 bis 14 in einer Höhe (26) von zumindest 10 km über Meereshöhe., vorzugsweise mittels einer luftgestützten Plattform (24) oder einem Satelliten.
